# Europäisches Patentamt

## European Patent Office

## Office européen des brevets

(11) Publication number: **0 120 687**
**B1**

# EUROPEAN PATENT SPECIFICATION

(45) Date of publication of patent specification: **04.11.87**

(51) Int. Cl.⁴: **B 60 K 41/14, F 16 H 9/18**

(21) Application number: **84301958.9**

(22) Date of filing: **22.03.84**

(54) **Control system for an infinitely variable belt-drive transmission.**

(30) Priority: **23.03.83 JP 48400/83**

(43) Date of publication of application:
**03.10.84 Bulletin 84/40**

(45) Publication of the grant of the patent:
**04.11.87 Bulletin 87/45**

(84) Designated Contracting States:
**DE FR GB NL**

(56) References cited:
**EP-A-0 011 342**
**FR-A-1 480 556**
**GB-A-2 057 606**
**GB-A-2 058 256**
**GB-A-2 076 483**
**US-A-3 202 012**

(73) Proprietor: **FUJI JUKOGYO KABUSHIKI KAISHA**
**7-2 Nishishinjuku 1-chome Shinjuku-ku**
**Tokyo (JP)**

(72) Inventor: **Takano, Toshio**
**1-3-2 Sakae-cho Hamuramachi**
**Nishitama-gun Tokyo (JP)**
Inventor: **Sakakiyama, Ryuzo**
**1-21 Takamatsu**
**Toshima-ku Tokyo (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a system for controlling the transmission ratio of an infinitely variable transmission for a vehicle.

U.S. Patent 4,369,675 (=EP—A—11342) discloses such a control system. The transmission itself comprises an endless belt running over an input pulley and an output pulley, each of which is so designed that the running diameter of the driving belt on the pulley varies in dependency on driving conditions. In the control system, a transmission ratio control valve and a pressure regulator valve change the transmission ratio in dependency on the throttle position and the engine speed of the vehicle. The engine speed is detected by the Pitot pressure determined by the centrifugal force exerted on oil in an annular groove in the input pulley.

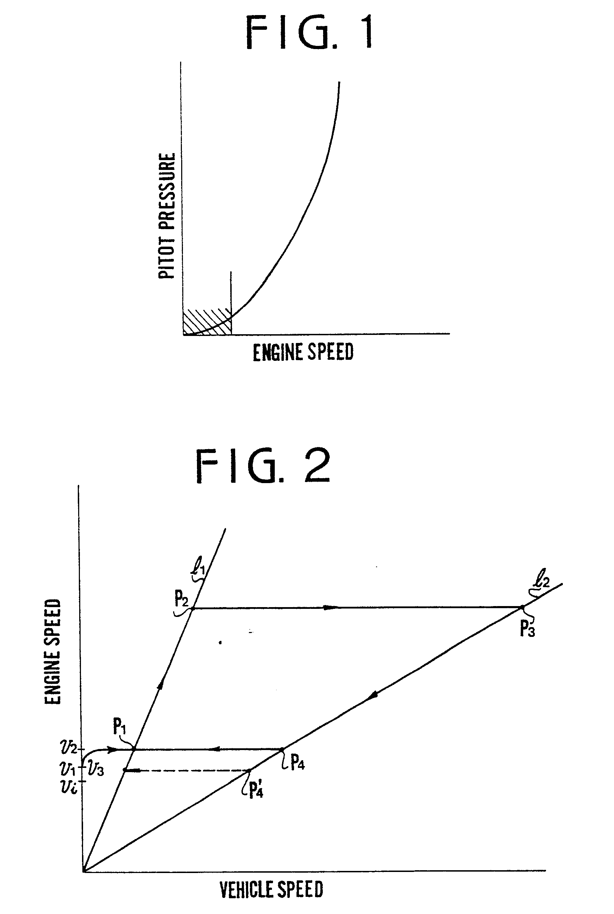

Figure 1 of the accompanying drawings shows the variation of Pitot pressure with engine speed, the Pitot pressure speed curve being of second degree. As seen from the graph, the Pitot pressure varies steeply with variation of the engine speed in the middle and high speed range; Pitot pressure can thus be usefully used for the control of the valves in that speed range. However, in the low speed range shown by hatching lines, the Pitot pressure is low and does not vary greatly with variation of the engine speed. Accordingly, the transmission ratio control valve and the pressure regulator valve cannot be finely controlled by Pitot pressure at the lower end of the engine speed range, without instability arising.

In an attempt to improve the characteristic in the low engine speed range, it may be proposed to increase the diameter of the annular groove used for detecting Pitot pressure or to increase the pressure receiving area of the spool of each valve. However, such a measure also affects the characteristic in the middle and high engine speed range and hence no improvement can be expected.

The infinitely variable belt-drive transmission has a transmission control characteristic as shown in Figure 2, showing the relationships between vehicle speed and engine speed of a vehicle provided with the transmission. A clutch provided between the engine crankshaft and the transmission begins to engage when the engine speed reaches a speed $V_1$ which is a little higher than idling speed $V_i$, and the clutch engages entirely at a point $P_1$ when the engine speed reaches to a predetermined speed $V_2$. The vehicle is driven at that time at the highest transmission ratio, with both engine speed and vehicle speed increasing as the accelerator pedal is depressed. Since the transmission ratio is kept at the highest transmission ratio of the infinitely variable transmission, the engine speed and vehicle speed increase along a straight line $l_1$. When relationship between the depression degree of the accelerator pedal and the engine speed reaches to a given condition, the transmission ratio starts at

point $P_2$ to change to decrease the ratio. Accordingly, the line representing engine speed and vehicle speed on the line $l_1$ changes to a horizontal line. When the transmission ratio reaches to the lowest ratio at a point $P_3$, the engine speed and vehicle speed change along line $l_2$. Upon decelerating while the transmission ratio is lowest, both values of the engine speed and the vehicle speed descend along the line $l_2$. Further, when the engine speed decreases to a point $P_4$, which corresponds to the engine speed $V_2$ and at which the clutch was engaged, the transmission ratio infinitely increases. Thus the vehicle speed decreases along a horizontal line. When the vehicle speed reaches the line $l_1$ which represents the highest transmission ratio, the engine speed also decreases along the line $l_1$. When the engine speed falls to speed $V_1$, the clutch is disengaged.

In order to improve the fuel consumption in such a transmission characteristic, it is desirable to locate the lower limit point $P_4$ at the lowest transmission ratio at as low an engine speed as possible. To accomplish the transmission control at low engine speed, signal pressure in the low speed range must be exactly obtained. The Pitot pressure as a signal pressure in the prior art is unstable in a low engine speed range as explained above. Accordingly, in the system of the prior art, it is difficult to lower the lower limit point $P_4$ to the point $P'_4$, for example.

An object of the present invention is to provide a system which may produce a stable signal pressure at low engine speeds, so that the transmission ratio in a low engine speed range can be exactly controlled.

Another object of the invention is to enable the lower limit point at the lowest transmission ratio to be moved to an engine speed lower than the prior art, thereby to improve fuel consumption.

The invention thus relates to a system for controlling the transmission ratio of an infinitely variable transmission for transmitting the power of an internal combustion engine, comprising a primary pulley having a hydraulically shiftable disc and a hydraulic cylinder for shifting the disc, a secondary pulley having a hydraulically shiftable disc and a hydraulic cylinder for operating the disc, a belt engaging both pulleys, a pressure oil circuit having a pump, and a spool valve for transmission ratio control, by controlling the supply of pressurized oil, according to engine speed, to move the disc of the primary pulley, characterized by a hydraulic circuit for applying control oil to one end of the spool of the spool valve, an electronic control circuit responsive to ignition pulses of said engine for producing an output signal dependent on the engine speed, a modulator valve provided in the hydraulic circuit for producing a constant pressure supply of control oil, an electromagnetic valve provided in the hydraulic circuit, having a coil responsive to the output signal of the electric control circuit, and receiving the supply of control oil at constant pressure from the modulator valve for controlling the signal pressure of the control oil applied to the spool of the spool valve, thereby controlling the transmission ratio.

The invention will be more readily understood by way of example from the following description of a control system for controlling transmission ratio, reference being made to Figures 3 to 7 of the accompanying drawings, in which:

Figure 3 is a schematic illustration of an infinitely variable belt-drive transmission,

Figure 4 is a schematic diagram showing a control system for the transmission;

Figure 5 is an electronic control circuit used in the control system;

Figure 6 shows waveforms at various positions of the circuit of Figure 5; and

Figure 7 is a graph showing the signal engine speed characteristic.

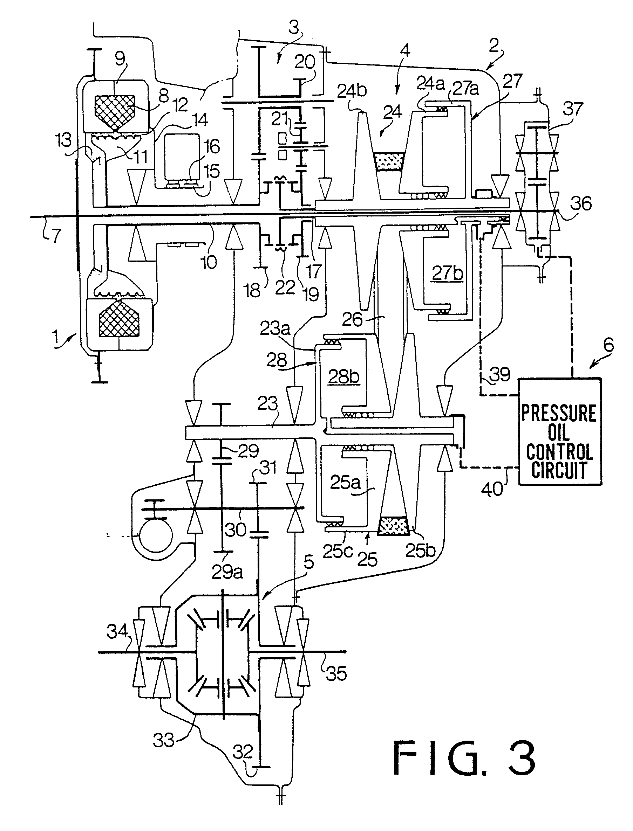

The infinitely variable belt-drive automatic transmission for a vehicle shown in Figure 3, comprises an electromagnetic powder clutch 1, an infinitely variable belt-drive transmission 2, a reversing mechanism 3, pulleys and belt device 4, final reduction device 5, and pressure oil control circuit 6. The crankshaft 7 of an engine (not shown) is connected to an annular drive member 9 of the electromagnetic powder clutch 1. The electromagnetic powder clutch comprises a coil 8 provided in the drive member 9, a driven member 11 having its outer periphery spaced from the inner periphery of the drive member 9 by a gap 12, and a powder chamber 13 defined between the drive member 9 and driven member 11. The powder chamber 13 is filled with powder of magnetic material. The driven member 11 is secured to an input shaft 10 of the belt-drive transmission. A holder 14 secured to the drive member 9 carries slip rings 15 which are electrically connected to the coil 8. The coil 8 is supplied through brushes 16 and slip rings 15 with control current from a control circuit.

When the magnetizing coil 8 is excited by clutch current, drive member 9 is magnetized to produce a magnetic flux passing through the driven member 11. The magnetic powder is aggregated in the gap 12 by the magnetic flux and the driven member 11 is engaged with the drive member 9 by the powder. On the other hand, when the clutch current is cut off, the drive and driven members 9 and 11 are disengaged from one another.

The reversing mechanism 3 is provided between the input shaft 10 and a main shaft 17 of the infinitely variable transmission 2. The main shaft 17 is cylindrical and is disposed coaxially with the input shaft 10. The reversing mechanism 3 comprises a drive gear 18 integral with input shaft 10 and a driven gear 19 rotatably mounted on the main shaft 17 for reverse drive. Gear 18 is engaged with gear 19 through a counter gear 20 and an idler gear 21. An axially movable clutch 22 is splined on the main shaft 17; by shifting the clutch 22 from the neutral position (P (parking) or N (neutral) range) shown and engaging it with gear 18, the main shaft 17 is coupled directly with the input shaft 10 to establish forward drive condition in the D (drive) range, while by shifting the clutch 22 in the opposite direction and engaging it with gear 19, the direction of rotation of the main shaft 17 is reversed by gears 18 to 21 to establish reverse drive condition (R range).

Main shaft 17 has an axial passage in which is mounted an oil pump driving shaft 36 connected to crankshaft 7. An axially fixed conical disc 24b is secured to main shaft 17 and an axially movable conical disc 24a is axially slidably mounted on the shaft portion of the disc 24b fixed to the main shaft; discs 24a and 24b together form a primary pulley 24. The movable conical disc 24a also slides in a cylinder 27a secured to the main shaft 17 to form therewith a cylinder chamber 27b acting as a pressure oil servo device 27, with the movable conical disc 24a acting as a piston in the cylinder chamber 27b. Chamber 27b communicates with a gear pump 37 through a passage 39 and the pressure oil control circuit 6. The gear pump 37 is driven by the shaft 36.

An output shaft 23 is disposed parallel with the main shaft 17. A fixed conical disc 25b is formed on the output shaft 23 opposite the movable disc 24a and a movable conical disc 25a is slidably mounted on the shaft 23 opposite disc 24b. Movable conical disc 25a has a cylindrical portion 25c in which a piston 23a of the output shaft 23 is slidably engaged to form a pressure oil servo device 28. The discs 25a and 25b form a secondary pulley 25. A chamber 28b defined by the movable conical disc 25a and piston 28a is communicated with the gear pump 37 through a passage 40 and the pressure oil control circuit 6. A drive belt 26 engages with the primary pulley 24 and the secondary pulley 25.

Secured to the output shaft 23 is a drive gear 29 which engages with a gear 29a on an intermediate shaft 30. An output gear 31 secured to shaft 30 engages with a final reduction gear 32. Rotation of the final gear 32 is transmitted to axles 34 and 35 of the vehicle driving wheels through a differential 33.

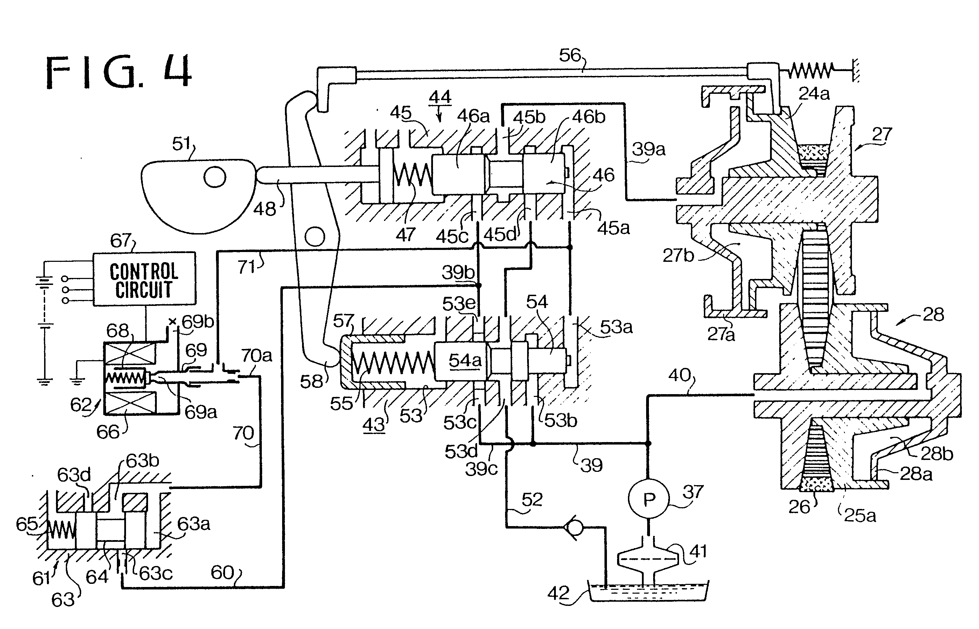

Referring to Figure 4, the chamber 27b of servo device 27 is supplied with pressure oil by the gear pump 37 from an oil reservoir 42 via a filter 41, conduit 39, pressure regulator valve 43 and transmission ratio control valve 44. Chamber 28b of servo device 28 is supplied with pressure oil through a conduit 40 without passing through valves 43 and 44. The movable conical disc 24a is so designed that its pressure receiving area is larger than that of movable conical disc 25a.

The transmission ratio control valve 44 comprises a valve body 45, spool 46, spring 47 for urging the spool towards the right, i.e. in a direction tending to decrease the transmission ratio, and an actuating member 48 for the spring 47. The actuating member 48 engages a shift cam 51. The shift cam 51 is operatively connected to an accelerator pedal (not shown) of the vehicle so as to be rotated in dependency on the magnitude of depression of the pedal. A port 45b of the valve 44 is selectively communicated with a pressure oil supply port 45c or a drain port 45d in accordance with the position of lands 46a and 46b of spool 46. Port 45b communicates with chamber 27b through a conduit 39a, port 45c communicates with pressure regulator valve 43 through a conduit 39b, and drain port 45d communicates with oil reservoir 42 through a port 53d of valve 43, and conduit 52.

The pressure regulator valve 43 comprises a valve body 53, spool 54, and a spring 55 for urging the spool 54 in one direction. The spool 54 is subject to the pressure of the pressure oil supplied through conduit 39 and port 53b, so that the spool 54 is moved to the left by the oil pressure against the action of spring 55. One end of spring 55 engages with a cylinder 57 which is slidably located in the valve body 53 and which is moved by disc 24a by rod 56 and arm 58. The position of cylinder 57 is thus dictated by the transmission ratio during operation. A port 53c also connected with conduit 39 through an conduit 39c communicates with the conduit 39b through exit port 53e and can communicate with the drain port 53d according to the position of a land 54a.

The port 53e also communicates with a modulator valve 61 through conduits 39b and 60. The modulator valve 61 has a body 63, spool 64 and return spring 65. An inlet port 63c connected to the conduit 60 selectively communicates with an outlet port 63b or drain port 63d. A free end chamber 63a and port 63b communicate with an electromagnetic valve 62.

The electromagnetic valve 62 comprises a coil 66, piston 68, injector tube 69 having a port 69a aligned with an end of the piston 68, and drain port 69b. The port 69a is communicated with port 63b and chamber 63a of modulator valve 61 through a conduit 70 having an orifice 70a. The coil 66 is supplied with a duty ratio control signal from a control circuit 67. The port 69a is further communicated with free end chambers 45a and 53a of valves 44 and 43 through a passage 71. The electromagnetic valve 62 is so arranged that when the coil is excited, the piston 68 is moved to the left against spring bias to open the port 69a.

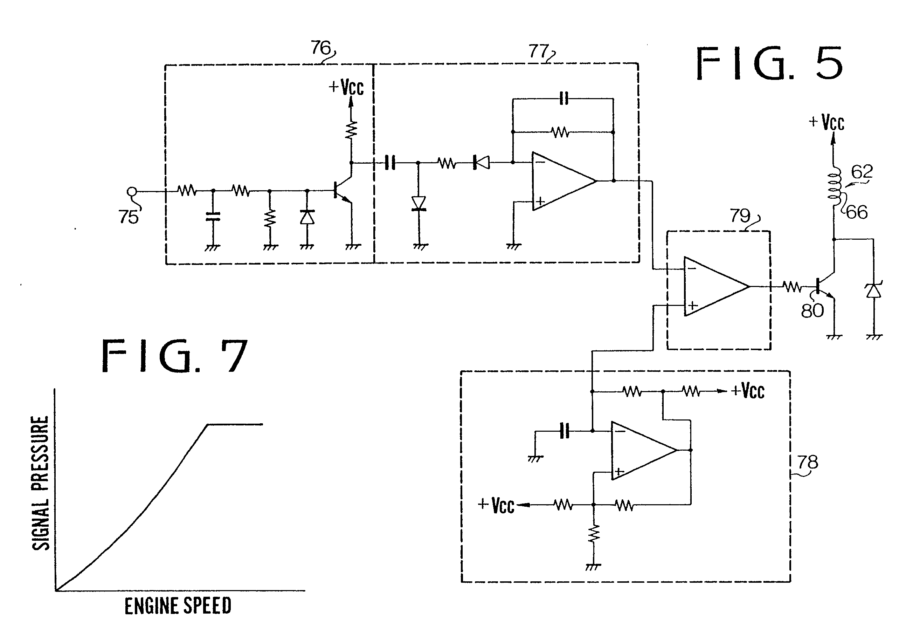

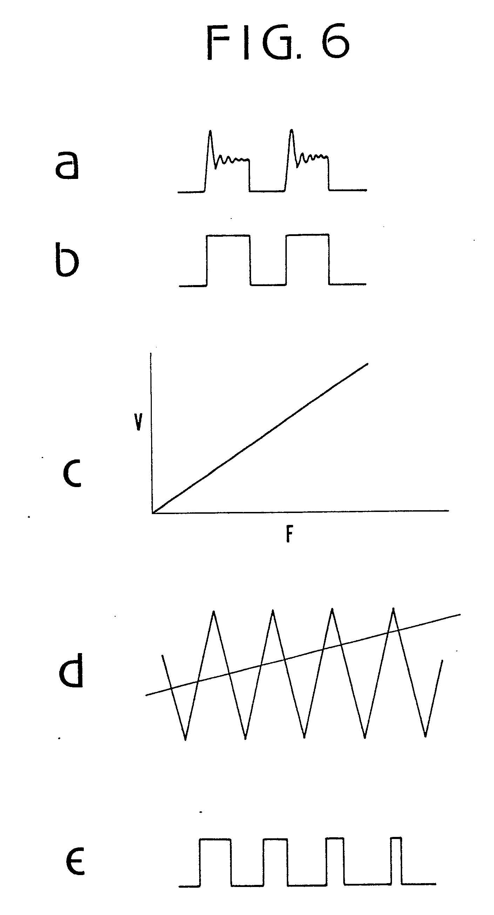

In the control circuit 67 of Figure 5, an input terminal 75 is supplied with ignition pulses (Figure 6(a)) at a rate dependent on engine speed, and those pulses are shaped by a waveform shaping circuit 76 to square pulses (Figure 6(b)). The output pulses of the shaping circuit 76 is converted to an analogue voltage by a frequency-to-voltage converter 77 as shown in Figure 6(c). The output voltage of the converter 77 is compared with triangular pulses from a triangular wave pulse generator 78 at a comparator 79 as shown in Figure 6(d). The comparator 79 then produces output pulses, of which the duty ratio (mark/space ratio) decreases with increase of the engine speed as shown in Figure 6(e). The output pulses of the comparator 79 are applied to the base of a transistor 80 to turn it on and off. Transistor 80 is electrically connected in series with the coil 66, thereby intermittently exciting the coil. The signal pressure of the oil supplied through conduit 71 is thus made dependent on the engine speed as shown in Figure 7 and hence the oil supplied to chambers 45a and 53a from the pump 37 through valves 43, 61 and 62 is dependent on engine speed. If the oil pressure in the chamber 63a is higher than the bias pressure of return spring 65, spool 64 is moved to the left to restrict port 63c and to open the port 63d. Thus, the pressure of oil applied to the electromagnetic valve 62 is maintained constant.

When the engine is started, the engine speed is low, so that the duty ratio of the pulses (Figures 6(e)) from the comparator 79 is large. Accordingly, the period for which port 69a of electromagnetic valve 62 is open is long, so that a large amount of pressure oil is drained from ports 69a and 69b. Thus, the signal pressure of pressure oil from the electromagnetic valve 62 is low, resulting in movement of spool 46a of transmission ratio control valve 44 to the right. Accordingly, port 45b communicates with port 45d to drain the oil in the chamber 27b. The disc 24a moves to the left to provide the highest transmission ratio.

When the accelerator pedal is depressed, shift cam 51 moves the actuating member 48 to the right. With the increase of engine speed, the signal pressure from the valve 62 increases, thereby moving spools 54a and 46a to the left against springs 55 and 47, respectively. Thus, port 45b is communicated with port 45c to apply pressure oil to chamber 27b. Since the pressure receiving area of the disc 24a is larger than that of the disc 25a, the disc 24a is moved to the right and the disc 25a is moved to the right by means of the drive belt 26 to decrease the transmission ratio. The movement of the disc 24a causes rod 56 to move to the right, to reduce the compression force of the spring 55. Thus, the spool of the regulator valve 43 moves to the left to regulate the pressure of the pressure oil from the pump 37.

When the engine speed decreases to a predetermined low speed $V_3$ (Figure 2), which is lower than the speed $V_2$, the signal pressure from the valve 62 falls below the spring force of spring 47 which shifts the spool 46 to the right. Thus, the pressure in the chamber 27b decreases, causing disc 24a to move to the left. Accordingly, transmission ratio begins to increase at point $P'_4$ of Figure 2.

Because the signal pressure for operating the transmission ratio control valve is made dependent on the rate at which ignition pulses are generated, and hence on the engine speed, stable signal pressures can be obtained even at low engine speeds, so that stable transmission ratio control at low engine speeds become possible. Acordingly, it is possible to lower the lower limit point at the lowest transmission ratio during the deceleration of the vehicle, so as to improve fuel consumption. As the signal pressure is produced from the constant pressure oil regulated by the modulator valve, the signal pressure exactly represents engine speed, enabling exact control of the transmission ratio to be achieved.

## Claims

1. A system for controlling the transmission ratio of an infinitely variable transmission for transmitting the power of an internal combustion engine, comprising a primary pulley (27) having a hydraulically shiftable disc (24a) and a hydraulic cylinder (27a) for shifting the disc (24a), a secondary pulley (28) having a hydraulically shiftable disc (28a) and a hydraulic cylinder (25a) for operating the disc (28a), a belt (26) engaging both pulleys (27; 28) a pressure oil circuit having a pump (37), and a spool valve (44) for transmission ratio control, by controlling the supply of pressurized oil, according to engine speed, to move the disc of the primary pulley characterized by

a hydraulic circuit (39b, 60, 62, 63, 70, 71) for applying control oil to one end of the spool (46) of the spool valve (44),

an electronic control circuit (67) responsive to ingition pulses of said engine for producing an output signal dependent on the engine speed,

a modulator valve (63) provided in the hydraulic circuit for producing a constant pressure supply of control oil,

an electromagnetic valve (62) provided in the hydraulic circuit, having a coil responsive to the output signal of the electric control circuit, and receiving the supply of control oil at constant pressure from the modulator valve for controlling the signal pressure of the control oil applied to the spool (46) of the spool valve (44), thereby controlling the transmission ratio.

2. A system for controlling transmission ratio according to claim 1, wherein the electronic control circuit (67) comprises a circuit (76—79) for producing output pulses dependent on ignition pulses and a transistor (80) responsive to said output pulses for intermittently exciting the coil (66).

3. A system for controlling transmission ratio according to claim 1 or claim 2, wherein the electromagnetic valve is so arranged to vent to drain a proportion of the pressure oil in dependency on the excitation of the coil (66).

## Patentansprüche

1. System zum Steuern des Übersetzungsverhältnisses eines stufenlos verstellbaren Getriebes zum Übertragen der Antriebsleistung eines Verbrennungsmotors; mit einer ersten Riemenscheibe (27), die eine hydraulisch verstellbare Scheibe (24a) und einen Hydraulikzylinder (27a) zum Verstellen der Scheibe (24a) aufweist; mit einer zweiten Riemenscheibe (28), die eine hydraulisch verstellbare Scheibe (28a) und einen Hydraulikzylinder (25a) zum Verstellen der Scheibe (28a) aufweist; mit einem um beide Riemenscheiben (27, 28) geschlugenen Riemen (26); mit einem eine Pumpe (37) aufweisenden Drucköikreis und mit einem Getriebe-Steuerventil (44) zur Steuerung des zugeführten Drucköls entsprechend der Motordrehzahl durch Verstellen der Scheibe der ersten Riemenscheibe; gekennzeichnet durch

eine Hydraulikschaltung (39b, 60, 62, 63, 70, 71) zum Zuführen von Steueröl an das eine Ende des Schiebers (46) des Steuerventils (44); eine elektronische Steuerschaltung (67), die auf die Zündimpulse des Motors anspricht und ein Ausgangssignal liefert, das von der Motordrehzahl abhängt; ein Modulatorventil (63) in der Hydraulikschaltung zum Bereitstellen einer Steuerölversorgung mit konstantem Druck; und ein elektromagnetisches Ventil (62) in der Hydraulikschaltung, deren Magnetspule abhängig von dem Ausgangssignal der elektrischen Steuerschaltung anspricht und dem das Steueröl mit konstantem Druck vom Modulatorventil zugeführt wird, um den Signaldruck des dem Schieber (46) des Steuerventils zugeführten Steueröls und damit das Übersetzungsverhältnis zu steuern.

2. System nach Anspurch 1, dadurch gekennzeichnet, daß die elektronische Steuerschaltung (67) eine Schaltungsanordnung (76—79) zum Erzeugen von Ausgangsimpulsen enthält, die von den Zündimpulsen abhängen, sowie einen Transistor (80), der auf die Ausgangsimpulse anspricht, um die Magnetspule (66) intermittierend zu erregen.

3. System nach Anspruch 1 oder 2, dadurch gekennzeichnet, daß das elektromagnetische Ventil derart angeordnet ist, daß es einen proportionalen Teil des Drucköls abhängig von der Erregung der Magnetspule (66) ableitet.

## Revendications

1. Système pour commander le rapport d'une transmission variable en continu transmettant l'énergie d'un moteur à combustion interne, qui comprend une poulie primaire (27) comportant un disque pouvant être déplacé par voie hydraulique (24a) et un cylindre hydraulique (27a) pour déplacer ledit disque (24a), une poulie secondaire (28) comportant un disque (28a) pouvant' être déplacé par voie hydraulique et un cylindre hydraulique (25a) pour actionner ledit disque (28a), une courroie (26) passant autour des deux poulies (27, 28) un circuit de pression d'huile comportant une pompe (37) et une valve à tiroir (44) pour commander le rapport de transmission, en réglant l'alimentation d'huile sous pression, en fonction de vitesse du moteur, de manière à déplacer le disque de la poulie primaire, caractérisé en ce qu'il comprend:

un circuit hydraulique (39b, 60, 62, 63, 70, 71) pour appliquer de l'huile de commande à l'une des extrémités du tiroir (64) de la valve à tiroir (44);

un circuit de commande électronique (67) qui en réponse aux impulsions d'allumage dudit moteur produit un signal de sortie qui est fonction de la vitesse de celuici;

une valve de modulation (63) prévue dans le circuit hydraulique afin d'assurer une pression d'alimentation constante de l'huile de commande; et

une valve électromagnétique (62) prévue dans le circuit hydraulique, comportant une bobine répondant aux signaux de sortie du circuit électrique de commande et recevant de l'huile de commande à pression constante de la valve de modulation afin de régler la pression de signal de l'huile de commande appliquée au tiroir (46) de la valve à tiroir (44), en commandant ainsi le rapport de transmission.

2. Système pour commander le rapport d'une transmission, selon la revendication 1, caractérisé en ce que le circuit de commande électronique (67) comprend un circuit (76—79) pour produire des impulsions de sortie qui sont fonction des impulsions d'allumage, et un transistor (80) qui en réponse à ces impulsions de sortie excite la bobine (66) de façon intermittente.

3. Système pour commander le rapport d'une transmission selon la revendication 1 ou 2, caractérisé en ce que la valve électromagnétique est arrangée pour évacuer vers le drainage une fraction de la pression d'huil qui est fonction de l'excitation de la bobine (66).

# FIG. 1

PITOT PRESSURE

ENGINE SPEED

# FIG. 2

ENGINE SPEED

$\ell_1$

$P_2$

$\ell_2$

$P_3'$

$P_1$

$\upsilon_2$

$\upsilon_1$ $\upsilon_3$

$\upsilon_i$

$P_4$

$P_4'$

VEHICLE SPEED

1

FIG. 3

# FIG. 4

0 120 687

FIG. 5

FIG. 7

SIGNAL PRESSURE

ENGINE SPEED

0 120 687

# FIG. 6